# EUROPEAN PATENT SPECIFICATION

(11) **EP 0 982 330 B1**
(45) Date of publication and mention of the grant of the patent: **17.10.2007**
(21) Application number: 98306909.7
(22) Date of filing: 27.08.1998
(51) Int. Cl.: C08G 18/08, C08G 18/65, C08J 3/14

(54) **An improved process for the preparation of polyurethane spherical particle**
Verbessertes Verfahren zur Herstellung von spherischen Polyurethanpartikeln
Procédé amélioré pour la préparation de particules sphériques de polyuréthane

(43) Date of publication of application: 01.03.2000
(73) Proprietor: COUNCIL OF SCIENTIFIC AND INDUSTRIAL RESEARCH, New Delhi 110 001 (IN)
(72) Inventor: Lalgudi, Srinivasan Ramanathan, Maharashtra (IN); Swaminathan, Sivaram, Maharashtra (IN)
(74) Representative: Shah, Punita

(56) References cited:
- EP-A- 0 318 939
- EP-A- 0 414 073
- CHEMICAL ABSTRACTS, vol. 113, no. 10, 3 September 1990 Columbus, Ohio, US; abstract no. 79237, XP000183014 & PATENT ABSTRACTS OF JAPAN vol. 014, no. 134, 14 March 1990 & JP 02 006519 A (NIPPON POLYURETHANE INDUSTRY CO.,LTD.), 10 January 1990

## Description

### FIELD OF INVENTION

The present invention relates to a process for the preparation of polyurethane in powder form with controlled particle size and shape. More particularly it relates to the production of polyurethane microspheres from a diol and diisocyanate by dispersion polymerization in the presence of a polycondensable macromonomer having the formula (I) as set out in the following description.

Polyurethane particulates obtained by this invention are suitable for a wide variety of useful applications such as coatings, adhesives and also an encapsulant material for pigments, agrochemicals, drugs and reactive chemicals like curing agents.

### BACKGROUND OF INVENTION

In prior art, polyurethane powders are prepared by cryogenic grinding or extrusion and granulation of thermoplastic polyurethanes (U.S.Pat. 3214411; JP 02-124978). JP 03-181526 discloses a process for producing polyurethane microparticles by dissolving polyurethane resin in amino alcohol at 130 to 150°C followed by cooling, filtering and drying under vacuum. In another method (JP 04-248875), hydroxyl and/or amino group containing resin is reacted with blocked isocyanates in a suitable solvent at elevated temperature. The solvent is removed under reduced pressure. The polyurethane powder is filtered and dried. These techniques however do not yield polyurethane powder in controlled particle size and shape.

JP 02-06519 discloses thermoplastic polyurethane powder having a particle size of 100-300 µm and being prepared in paraffin in the presence of graft-polyacrylate-polyester or a methacrylate copolymer dispersant.

Spherical polyurethane particles are prepared by suspension polymerization of an isocyanate terminated prepolymer in aqueous or non-aqueous medium. U.S.Pat. 4083831 describes oil in water suspension polycondensation technique wherein an isocyanate terminated prepolymer is suspended in aqueous media. The reaction proceeds in aqueous medium and produces polyurethane urea powder which is stabilized by a combination of anionic and homopolymeric stabilizers. In an another variant, polyurethane spherical particles are obtained by suspension polycondensation in non-aqueous media (U.S.Pat. 4032516). In this art, the isocyanate terminated prepolymer is suspended in paraffin oil using sodium dodecylsulfosuccinate as a stabilizer. The chain extension was carried out with 1,4-butane diol in n-heptane and in the presence of an amphiphilic block copolymer namely 1-hexadecane vinylpyrrolidone as steric stabilizer.

Stabilization of polyurethane spherical particles in aqueous and non-aqueous medium is known in the prior art. For instance, JP 04-225755; JP 03-31359 and JP 04-202311 describes the use of a stabilizer derived from polycaprolactone, polybutadiene and isophrone diisocyanate to prepare polyurethane powder in n-heptane. In yet another application JP 02-38453 discloses the preparation of stabilizers derived from poly(butylene adipate), maleic anhydride and lauryl methacrylate. In addition to these block copolymers, protective colloids such as polyvinyl alcohol, methylcellulose, gelatin, sodium alkyl sulfate are also employed to stabilize polyurethane microspheres (JP 04-161416).

Polyurethane spherical particles obtained by this prior art are polydisperse and their size ranging between 1 and 1000 even at higher stabilizer concentrations. Furthermore, none of the application uses diol and diisocyanate directly. Instead, an isocyanate terminated prepolymer is used to produce polyurethane microspheres.

### OBJECTS OF THE INVENTION:

The object of the present invention is to provide a process for preparing polyurethane microspheres with controlled particle size from a diol and a diisocyanate.

Another object of this invention is to stabilize polyurethane particles using a polycondensable macromonomer, specifically a macrodiol which is enchained in the polymer backbone and stabilizes the polyurethane particles.

Yet another object of the present invention is to produce polyurethane particles of size ranging from 100 nm to 1000 µ by varying the concentration of the stabilizer.

### DETAILED DESCRIPTION OF THE INVENTION

Accordingly, the present invention provides a process for producing polyurethane microspheres with controlled particle size which comprises reacting a diol and an organic diisocyanate and optionally a multifunctional hydroxyl compound in the presence of a macrodiol stabilizer containing a long chain hydrophobic moiety with reactive hydroxyl groups at the chain terminal having the formula (I) : 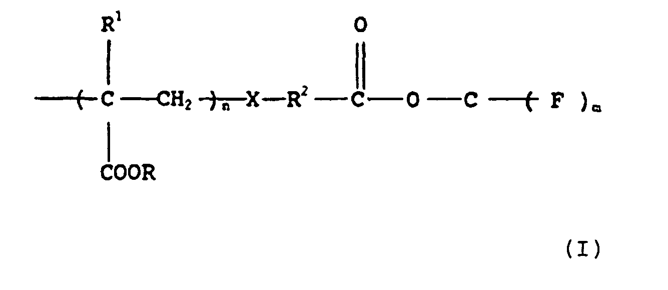 wherein
R = an alkyl group with 1-40 carbon atoms
R¹= hydrogen or methyl
R² = alkylene units
X = bifunctional moiety
F = functional group
n = 3-45
m = >2
and a catalyst in an organic solvent at temperatures ranging from 40 to 100°C for a period ranging between 2 and 12 hours, and separating the spherical polyurethane particles from the reaction mixture by conventional means.

The preparation of the macrodiol stabiliser has been claimed and disclosed in our copending European application No. 98 306 951.9 published as EP 0 982 334.

In an embodiment of the present invention the diols used are isocyanate reactive, preferably ethylene glycol, 1,2-propyleneglycol, 1,3-propyleneglycol, diethylene glycol, 1,4-butane diol, 1,3-butane diol, 1,6-hexane diol, 2-ethyl-1,3-hexane diol, 1,8-octane diol, neopentyl glycol, 2-methyl-1,3-propane diol, 1,4-cyclohexane dimethanol, polyether diol, polyester diol, polycaprolactone diol, hydroxyl terminated polybutadiene with 2 hydroxyl groups and a hydroxyl number ranging between 50 and 100 mg KOH/gm and acid number preferably less than 2 mg KOH/gm with number average molecular weights ranging from 200 to 3000.

In another embodiment the diisocyanates used are selected from 2,2,4-trimethyl hexamethylene diisocyanate, 1,4-tetramethylene diisocyanate, 1, 6-hexamethylene diisocyanate (HDI), isophorone diisocyanate (IPDI), 4,4'-methylene-bis-(cyclohexane diisocyanate), meta or para- tetramethyl xylene diisocyanate, α,α'-xylylene diisocyanate, toluene diisocyanate, 1,4-phenylene diisocyanate, 4,4'-diphenyl methane diisocyanate, and meta or para- tetramethyl xylene diisocyanate.

In a further embodiment the macrodiol stabilizer is derived from polylauryl methacrylate in the molecular weight range of 2000 to 5000.

In still another embodiment the catalyst used enhances the isocyanate - hydroxyl reaction and is selected from triethylene diamine, morpholine, N-ethylmorpholine, piperazine, triethanolamine, triethylamine, dibutyltindilaurate, stannous octoate, dioctyl tin di acetate, lead octoate, stannous tallate and dibutyltin dioxide.

In another embodiment of the present invention, the organic solvent used is isocyanate non reactive and a good solvent for the monomers and a non-solvent for the polymer particles, and is preferably selected from aliphatic hydrocarbons such as hexane, heptane, octane, decane, isooctane, dodecane, hexadecane, superior kerosene, paraffin oil, white mineral oil, and aromatic hydrocarbons such as benzene, toluene, xylene or a suitable mixture of aliphatic and aromatic hydrocarbons.

In a feature of the present invention, the ratio of diisocyanate to diol is maintained between 1 and 2, more preferably in the range from 1.05 to 1.5. The amount of macrodiol varies from 1 to 25 percent, preferably from 3 to 18 percent based on the total quantity of urethane forming reactants. The amount of catalyst is in the range from 0.005 to 1 weight percent based on the total amount of diol and diisocyanate. The ratio of monomer to organic continuous phase is between 5 and 50 and preferably in the range from 10 to 30. The polymerization can be carried out in any conventional resin reactor equipped with a cooling jacket, a double walled condenser, a thermowell, an inlet tube for nitrogen gas purging and an addition funnel for monomer feeding. Stirring can be done by using any conventional stirring device. The agitator speed is between 200 and 800 revolutions per minute (rpm). The polymerization reaction is carried out between 40°C and 100°C and more preferably between 60°C and 90°C. The reaction time is typically between 3 and 10 hours. The conversion of diisocyanate is in the range between 82 and 100 percent. The polyurethane microspheres formed at the end of the reaction are washed throughly with a low boiling aliphatic hydrocarbon particularly hexane, and dried at room temperature under vacuum. The particle size of the polyurethane microspheres ranges from 150 nm to 500 µ depending on the concentration of the macrodiol stabilizer.

### Example 1

In a four neck 250 ml round bottom flask fitted with a stirrer, condenser, nitrogen inlet and a thermowell, 0.38 g macrodiol (derived from polylauryl methacrylate of molecular weight 2000), 0.5 g of 1% dibutyl tin dilaurate in paraffin oil and 25 g paraffin oil were added and stirred at 500 rpm. The mixture was then heated to 65°C and 3 g 2-ethyl-1,3-hexane diol and 4.6 g toluene diisocyanate were added. The reaction was continued for 5h. The polyurethane microspheres formed was washed with hexane to remove paraffin oil and it is dried under vacuum at room temperature for about 4h to obtain a free flowing polyurethane powder.

### Example 2

In a four neck 250 ml round bottom flask fitted with a stirrer, condenser, nitrogen inlet and a thermowell, 0.76 g macrodiol (derived from polylauryl methacrylate of molecular weight 2000), 0.5 g of 1% dibutyl tin dilaurate in paraffin oil and 25 g paraffin oil were added and stirred at 500 rpm. The mixture was then heated to 65°C and 3 g 2-ethyl-1,3-hexane diol and 4.6 g toluene diisocyanate were added. The reaction was continued for 5h. The polyurethane microspheres formed was washed with hexane to remove paraffin oil and it is dried under vacuum at room temperature for about 4h to obtain a free flowing polyurethane powder.

### Example 3

In a four neck 250 ml round bottom flask fitted with a stirrer, condenser, nitrogen inlet and a thermowell, 1.14 g macrodiol (derived from polylauryl methacrylate of molecular weight 2000), 0.5 g of 1% dibutyl tin dilaurate in paraffin oil and 25 g paraffin oil were added and stirred at 500 rpm. The mixture was then heated to 65°C and 3 g 2-ethyl-1,3-hexane diol and 4.6 g toluene diisocyanate were added. The reaction was continued for 5h. The polyurethane microspheres formed was washed with hexane to remove paraffin oil and it is dried under vacuum at room temperature for about 4h to obtain a free flowing polyurethane powder with average particle size 1.2 microns.

### Example 4

In a four neck 250 ml round bottom flask fitted with a stirrer, condenser, nitrogen inlet and a thermowell, 0.38 g macrodiol (derived from polylauryl methacrylate of molecular weight 5000), 0.5 g of 1% dibutyl tin dilaurate in paraffin oil and 25 g paraffin oil were added and stirred at 500 rpm. The mixture was then heated to 65°C and 3 g 2-ethyl-1,3-hexane diol and 4.6 g toluene diisocyanate were added. The reaction was continued for 5h. The polyurethane microspheres formed was washed with hexane to remove paraffin oil and it is dried under vacuum at room temperature for about 4h to obtain a free flowing polyurethane powder.

### Example 5

In a four neck 250 ml round bottom flask fitted with a stirrer, condenser, nitrogen inlet and a thermowell, 0.76 g macrodiol (derived from polylauryl methacrylate of molecular weight 2000), 0.5 g of 1% dibutyl tin dilaurate in paraffin oil and 25 g paraffin oil were added and stirred at 500 rpm. The mixture was then heated to 65°C and 3 g 2-ethyl-1,3-hexane diol and 4.6 g toluene diisocyanate were added. The reaction was continued for 5h. The polyurethane microspheres formed was washed with hexane to remove paraffin oil and it is dried under vacuum at room temperature for about 4 h to obtain a free flowing polyurethane powder with average particle size 220 nm.

### Example 6

In a four neck 250 ml round bottom flask fitted with a stirrer, condenser, nitrogen inlet and a thermowell, 1.14 g macrodiol (derived from polylauryl methacrylate of molecular weight 5000), 0.5 g of 1% dibutyl tin dilaurate in paraffin oil and 25 g paraffin oil were added and stirred at 500 rpm. The mixture was then heated to 65°C and 3 g 2-ethyl-1,3-hexane diol and 4.6 g toluene diisocyanate were added. The reaction was continued for 5h. The polyurethane microspheres formed was washed with hexane to remove paraffin oil and it is dried under vacuum at room temperature for about 4 h to obtain a free flowing polyurethane powder with average particle size 180 nm.

### Example 7

In a four neck 250 ml round bottom flask fitted with a stirrer, condenser, nitrogen inlet and a thermowell, 0.25 g macrodiol (derived from polylauryl methacrylate of molecular weight 2000), 0.38 g of 1% dibutyl tin dilaurate in paraffin oil and 25 g paraffin oil were added and stirred at 500 rpm. The mixture was then heated to 65°C and 1.5 g polyester diol (number average molecular weight 750) and 0.45 g toluene diisocyanate were added. The reaction was continued for 5h. The polyurethane microspheres formed was washed with hexane to remove paraffin oil and it is dried under vacuum at room temperature for about 4 h to obtain a free flowing polyurethane powder.

### Example 8 (comparative example)

In a four neck 250 ml round bottom flask fitted with a stirrer, condenser, nitrogen inlet and a thermowell, 0.5 g of 1% dibutyl tin dilaurate in paraffin oil and 25 g paraffin oil were added and stirred at 500 rpm. The mixture was then heated to 65°C and 3 g 2-ethyl-1,3-hexane diol and 4.6 g toluene diisocyanate were added. After a period of 10 minutes the reaction mixture was gelled and large lumps were separated out from the paraffin oil medium.

### Example 9 (comparative example)

In a four neck 250 ml round bottom flask fitted with a stirrer, condenser, nitrogen inlet and a thermowell, 1.14 g carboxy terminated polylauryl methacrylate of molecular weight 5000, 0.5 g of 1% dibutyl tin dilaurate in paraffin oil and 25 g paraffin oil were added and stirred at 500 rpm. The mixture was then heated to 65°C and 3 g 2-ethyl-1,3-hexane diol and 4.6 g toluene diisocyanate were added. After a period of 10 minutes the reaction mixture was gelled and large lumps were separated out from the paraffin oil medium.

The two comparative examples suggest that polyurethane in powder form cannot be prepared without the use of the stabilizer described herein.

## Claims

1. A process for producing polyurethane microspheres with controlled particle size which comprises:
reacting a diol and an organic diisocyanate, and optionally a multifunctional hydroxyl compound, in the presence of a macrodiol stabilizer containing a long chain hydrophobic moiety with reactive hydroxyl groups at the chain terminal having the formula (I): 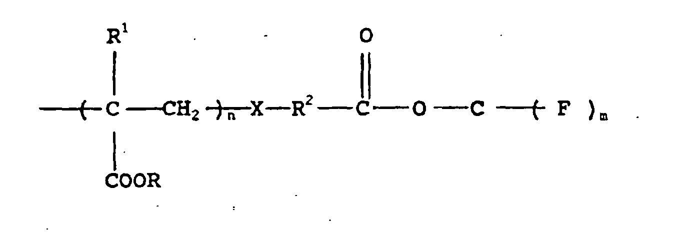
wherein
R = an alkyl group with 1-40 carbon atoms
R¹= hydrogen or methyl
R² = alkylene units
X = bifunctional moiety
F = functional group
n = 3-45
m = ≥2
and a catalyst in an organic solvent at temperatures ranging from 40 to 100°C for a period ranging between 2 and 12 hours, and
separating the spherical polyurethane particles from the reaction mixture by conventional means.

2. The process as claimed in claim 1, wherein said diol is isocyanate reactive.

3. The process as claimed in claim 2, wherein said diol is selected from the group consisting of ethylene glycol, 1,2-propyleneglycol, 1,3-propyleneglycol, diethylene glycol, 1,4-butane diol, 1,3-butane diol, 1,6-hexane diol, 2-ethyl-1,3-hexane diol, 1,8-octane diol, neopentyl glycol, 2-methyl-1,3-propane diol, 1,4-cyclohexane dimethanol, polyether diol, polyester diol, polycaprolactone diol, hydroxyl terminated polybutadiene with 2 hydroxyl groups and a hydroxyl number ranging between 50 and 100 mg KOH/gm and acid number preferably less than 2 mg KOH/gm with number average molecular weights ranging from 200 to 3000.

4. The process according to any of claims 1 to 3, wherein said diisocyanate is selected from the group consisting of 2,2,4-trimethyl hexamethylene diisocyanate, 1,4-tetramethylene diisocyanate, 1,6-hexamethylene diisocyanate (HDI), isophorone diisocyanate (IPDI), 4,4'-methylene-bis-(cyclohexane diisocyanate), meta or para-tetramethyl xylene diisocyanate, α,α'-xylylene diisocyanate, toluene diisocyanate, 1,4-phenylene diisocyanate, 4,4'-diphenyl methane diisocyanate, and meta or para-tetramethyl xylene diisocyanate.

5. The process according to any of claims 1 to 4 wherein the macrodiol stabilizer is derived from polylaurylmethacrylate in the molecular weight range of 2000 to 5000.

6. The process according to any of claims 1 to 5, wherein said catalyst is selected from the group consisting of triethylene diamine, morpholine, N-ethylmorpholine, piperazine, triethanolamine, triethylamine, dibutyltindilaurate, stannous octoate, dioctyl tin diacetate, lead octoate, stannous tallate and dibutyltin dioxide.

7. The process according to any of claims 1 to 6 wherein the organic solvent is isocyanate non reactive, and a good solvent for the monomers and a non-solvent for the polymer particles.

8. The process according to claim 7 wherein the solvent is an aliphatic or aromatic organic solvent selected from the group consisting of hexane, heptane, octane, decane, isooctane, dodecane, hexadecane, superior kerosene, paraffin oil, white mineral oil, molex raffinate, benzene, toluene, xylene or suitable mixtures thereof.

9. The process according to any of claims 1 to 8 wherein the ratio of diisocyanate to diol is maintained between 1.05 to 1.5.

10. The process according to any of claims 1 to 9 wherein the amount of macrodiol varies from 3 to 18 weight percent based on the total quantity of urethane forming reactants.

11. The process according to any of claims 1 to 10 wherein the amount of catalyst is in the range from 0.005 to 1 weight percent based on the total amount of diol and diisocyanate.

12. The process according to any of claims 1 to 11 wherein the ratio of monomer to organic continuous phase is between 10 and 30.

13. The process according to any of claims 1 to 12 wherein the agitator speed is between 200 and 800 revolutions per minute (rpm).

14. The process according to any of claims 1 to 13 wherein the particle size of the polyurethane microspheres ranges from 150 nm to 500 µ depending on the concentration of the macrodiol stabilizer.

## Patentansprüche

1. Verfahren zur Herstellung von Polyurethan-Mikrokugeln mit kontrollierter Teilchengröße, umfassend:
Umsetzen eines Diols und eines organischen Diisocyanats sowie gegebenenfalls einer polyfunktionellen Hydroxylverbindung in Gegenwart eines Makrodiol-Stabilisators, der einen langkettigen hydrophoben Rest mit reaktiven Hydroxylgruppen am Kettenende enthält und die Formel (I) aufweist: 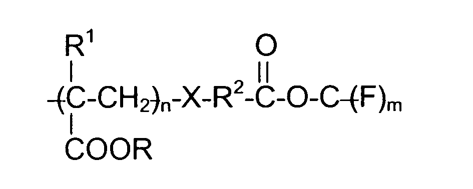
mit
R = eine Alkylgruppe mit 1-40 Kohlenstoffatomen,
R¹ = Wasserstoff oder Methyl,
R² = Alkyleneinheiten,
X = bifunktionelle Komponente,
F = funktionelle Gruppe,
n = 3-45
m = ≥2,
und eines Katalysators in einem organischen Lösungsmittel bei einer Temperatur im Bereich von 40 bis 100°C über einen Zeitraum im Bereich von 2 bis 12 Stunden, und
Abtrennen der sphärischen Polyurethanpartikel aus dem Reaktionsgemisch mit konventionellen Mitteln.

2. Verfahren nach Anspruch 1, wobei das Diol Isocyanat-reaktiv ist.

3. Verfahren nach Anspruch 2, wobei das Diol ausgewählt ist aus der Gruppe, bestehend aus Ethylenglykol, 1,2-Propylenglykol, 1,3-Propylenglykol, Diethylenglykol, 1,4-Butandiol, 1,3-Butandiol, 1,6-Hexandiol, 2-Ethyl-1,3-hexandiol, 1,8-Octandiol, Neopentylglykol, 2-Methyl-1,3-propandiol, 1,4-Cyclohexandimethanol, Polyetherdiol, Polyesterdiol, Polycaprolactondiol, Hydroxyl-terminiertem Polybutadien mit 2 Hydroxylgruppen und einer Hydroxylzahl im Bereich von 50 bis 100 mg KOH/gm sowie einer Säurezahl von vorzugsweise weniger als 2 mg KOH/gm, mit einem Zahlenmittel der Molekulargewichte im Bereich von 200 bis 3000.

4. Verfahren nach einem der Ansprüche 1 bis 3, wobei das Diisocyanat ausgewählt ist aus der Gruppe, bestehend aus 2,2,4-Trimethylhexamethylendiisocyanat, 1,4-Tetramethylendiisocyanat, 1,6-Hexamethylendiisocyanat (HDl), Isophorondiisocyanat (lPDl), 4,4'-Methylen-bis-(cyclohexandiisocyanat), meta- oder para-Tetramethylxyloldiisocyanat, α,α'-Xylylendiisocyanat, Toluoldiisocyanat, 1,4-Phenylendiisocyanat, 4,4'-Diphenylmethandiisocyanat und meta- oder para-Tetramethylxyloldiisocyanat.

5. Verfahren nach einem der Ansprüche 1 bis 4, wobei der Makrodiol-Stabilisator von Polylaurylmethacrylat im Molekulargewichtsbereich von 2000 bis 5000 abgeleitet ist.

6. Verfahren nach einem der Ansprüche 1 bis 5, wobei der Katalysator aus der Gruppe ausgewählt ist, bestehend aus Triethylendiamin, Morpholin, N-Ethylmorpholin, Piperazin, Triethanolamin, Triethylamin, Dibutylzinndilaurat, Zinn(II)-octanoat, Dioctylzinndiacetat, Bleioctanoat, Zinn(II)-tallat und Dibutylzinndioxid.

7. Verfahren nach einem der Ansprüche 1 bis 6, wobei das organische Lösungsmittel Isocyanat-unreaktiv und ein gutes Lösungsmittel für die Monomere sowie ein Nichtlösungsmittel für die Polymerpartikel ist.

8. Verfahren nach Anspruch 7, wobei das Lösungsmittel ein aliphatisches oder aromatisches organisches Lösungsmittel ist, ausgewählt aus der Gruppe, bestehend aus Hexan, Heptan, Octan, Decan, Isooctan, Dodecan, Hexadecan, hochwertigem Kerosin, Paraffinöl, weißem Mineralöl, Molex-Raffinat, Benzol, Toluol, Xylol oder geeigneten Gemischen davon.

9. Verfahren nach einem der Ansprüche 1 bis 8, wobei das Verhältnis von Diisocyanat zu Diol zwischen 1,05 bis 1,5 gehalten wird.

10. Verfahren nach einem der Ansprüche 1 bis 9, wobei die Menge des Makrodiols, bezogen auf die Gesamtmenge der Urethan-bildenden Reagenzien, im Bereich von 3 bis 18 Gew.-% liegt.

11. Verfahren nach einem der Ansprüche 1 bis 10, wobei die Menge des Katalysators, bezogen auf das Gesamtgewicht an Diol und Diisocyanat, im Bereich von 0,005 bis 1 Gew.-% liegt.

12. Verfahren nach einem der Ansprüche 1 bis 11, wobei das Verhältnis von Monomer zu organischer kontinuierlicher Phase zwischen 10 und 30 liegt.

13. Verfahren nach einem der Ansprüche 1 bis 12, wobei die Rührgeschwindigkeit zwischen 200 und 800 Umdrehungen pro Minute (UpM) liegt.

14. Verfahren nach einem der Ansprüche 1 bis 13, wobei die Teilchengröße der Polyurethan-Mikrokugeln im Bereich von 150 nm bis 500 µ liegt, abhängig von der Konzentration des Makrodiol-Stabilisators.

## Revendications

1. Procédé pour la production de microsphères polyuréthane avec des tailles de particules contrôlées, comportant :
mettre en réaction un diol et un diisocyanate organique, et optionnellement un composé hydroxyle multifonctionnel, en présence d'un stabilisateur macrodiol contenant une longue chaîne hydrophobique moitié avec des groupes hydroxyles réactifs en la chaîne terminale ayant la formule (I) : 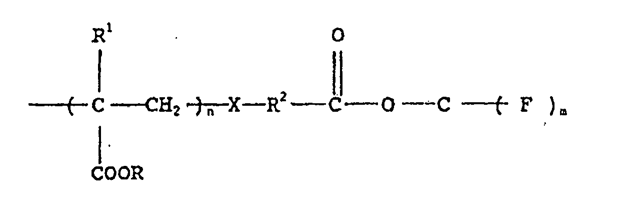
où
R = groupe alkyle avec 1 à 40 atomes de carbone
R1 = hydrogène ou méthyle
R2 = des unités alkylènes
X = moitié bifonctionnelle
F = groupe fonctionnel
n = 3-45
m=≥2
et un catalyseur dans un solvant organique avec des températures dans la gamme de 40 à 100°C pour une période dans la gamme de 2 à 12 heures, et
séparer les particules polyuréthanes sphériques du mélange de réaction par des moyens conventionnels.

2. Procédé selon la revendication 1, **caractérisé en ce que** ledit diol est un réactif isocyanate.

3. Procédé selon la revendication 2, **caractérisé en ce que** ledit diol est choisi parmi le groupe consistant en glycol d'éthylène, 1,2-propylèneglycol, 1,3-propylèneglycol, diéthylène glycol, 1,4-butane diol, 1,3-butane diol, 1,6-hexane diol, 2-éthyl-1,3-hexane diol, 1,8-octane diol, néopentyl glycol, 2-méthyl-1,3-propane diol, 1,4-cyclohexane diméthanol, polyéther diol, polyester diol, polycaprolactone diol, hydroxyle terminé polybutadiène avec 2 groupes hydroxyles et un nombre hydroxyle variant de 50 et 100 mg KOH/gm et un nombre d'acide de préférence inférieur à 2 mg KOH/gm avec un nombre de poids moyen moléculaire variant de 200 à 3000.

4. Procédé selon l'une des revendications 1 à 3, **caractérisé en ce que** ledit diisocyanate est choisi parmi le groupe consistant en 2,2,4-triméthyle hexaméthylène diisocyanate, 1,4-tétraméthylène diisocyanate, 1,6-hexaméthylène diisocyanate (HDI), isophorone diisocyanate (IPDI), 4,4'-méthylène-bis-(cyclohexane diisocyanate), méta ou para-tétraméthyle xylène diisocyanate, α,α'-xylène diisocyanate, toluène diisocyanate, 1,4-phénylène diisocyanate, 4,4'-diphényle méthane diisocyanate, et méta ou para-tétraméthyle xylène diisocyanate.

5. Procédé selon l'une des revendications 1 à 4, **caractérisé en ce que** le macrodiol stabilisateur est dérivé de polylaurylméthacrylate dans la gamme de poids moléculaire de 2000 à 5000.

6. Procédé selon l'une des revendications 1 à 5, **caractérisé en ce que** ledit catalyseur est choisi parmi le groupe consistant en triéthylène diamine, morpholine, N-éthylmorpholine, pipérazine, triéthanolamine, triéthylamine, dibutyltindilaurate, octoate stanneux, dioctyl diacétate de fer, octoate de plomb, tallate et dibutyltin dioxide stanneux.

7. Procédé selon l'une des revendications 1 à 6, **caractérisé en ce que** ledit solvant organique est isocyanate non réactif, et un bon solvant pour les monomères et un non solvant pour les particules polymères.

8. Procédé selon la revendication 7, **caractérisé en ce que** le solvant est un solvant organique aliphatique ou aromatique choisi parmi le groupe consistant en hexane, heptane, octane, décane, isooctane, dodécane, hexadécane, kérosène supérieur, huile de paraffine, huile minérale blanche, molex raffiné, benzène, toluène, xylène ou mélange adapté de ces derniers.

9. Procédé selon l'une des revendications 1 à 8, **caractérisé en ce que** le ratio de diisocyanate par rapport à diol est maintenu entre 1,05 et 1,5.

10. Procédé selon l'une des revendications 1 à 9, **caractérisé en ce que** la quantité de macrodiol varie de 3 à 18 en pourcentage en poids, basée sur la quantité totale d'uréthane formant des réactants.

11. Procédé selon l'une des revendications 1 à 10, **caractérisé en ce que** la quantité de catalyseur est dans la gamme de 0,005 jusqu'à 1, en pourcent en poids, basée sur la quantité totale de diol et de diisocyanate.

12. Procédé selon l'une des revendications 1 à 11, **caractérisé en ce que** le ratio de phase continue monomère par rapport à la phase continue organique est entre 10 et 30.

13. Procédé selon l'une des revendications 1 à 12, **caractérisé en ce que** la vitesse d'agitation est entre 200 et 800 tours par minute (rpm).

14. Procédé selon l'une des revendications 1 à 13, **caractérisé en ce que** la taille de particules des microsphères polyuréthanes est dans la gamme de 150 nm à 500 µ, en fonction de la concentration du stabilisateur macrodiol.
